# EUROPEAN PATENT APPLICATION

(11) **EP 2 463 124 A2**
(43) Date of publication of application: **13.06.2012**
(21) Application number: 11191482.6
(22) Date of filing: 01.12.2011
(51) Int. Cl.: B60C 15/06

(54) **Pneumatic tire**

(30) Priority: 10.12.2010 US 421837 P
(71) Applicant: The Goodyear Tire & Rubber Company, Akron, OH 44316-0001 (US)
(72) Inventor: Feltes, Serge Guillaume, 57300 Hagondange (FR); Holtzmer, Marc, 5753 Frisange (LU); Hansen, Romain Fernand, 7766 Bissen (LU)
(74) Representative: Kutsch, Bernd

(57) **Abstract**

A pneumatic tire having a carcass (30) and a belt reinforcing structure (32) is described, , The carcass (30) comprising at least one inner ply (31) which is wound around an annular bead member (26) and extends radially outward towards a tread (22) forming a turnup end (40). The tire (20) further includes a rubber apex (50) located radially outward of the bead member (26) and having a radially outer end (52). The turnup end (40) is located axially outward of the rubber apex (50). The tire also comprises a reinforcement member (60) having a first end (62) and a second end (64), wherein the first end (62) is positioned adjacent the rubber apex (50) and the second end (64) is radially outward of the rubber apex outer end (52).

## Description

### Field of the Invention

The present invention is directed to a tire. More specifically, the present invention is directed to a tire suitable for use as a passenger tire.

### Background of the Invention

A conventional radial-ply automobile tire includes radial plies that are wrapped around two annular inextensible beads. In the tire making process, a green tire carcass ("green" meaning as yet uncured and still tacky) is built by sliding a green innerliner and radial ply over a tire "building drum" (or "building mandrel"). Two beads (each comprising a cable of steel filaments encased in green rubber) are then slid over the carcass, one at each side. The portions of the plies that extend beyond the beads are then turned up around the beads, forming "turn-ups". Then, the portion of the plies between the beads is expanded radially outward so as to contact the ply turn-ups. The annular cross-sectionally triangular rubber filler bounded by the turned up ply and the bead is called an "apex".

The choice of triangular dimensions and material properties of the apex affects the performance of the tire, such as tire weight, sidewall stiffness, handling, ride comfort, heat, material fatigue, and tire life. For example, since the apex extends up much of the length of the sidewall, increasing the stiffness of the apex increases the stiffness of the sidewall, yielding less sidewall flexing and hence less flexural heat and material fatigue, but at the cost of a rougher ride. Increasing the apex's radial length (so that it travels farther up the sidewall) further stiffens the sidewall and improves handling, which is beneficial for "high performance" tires.

Tire designers have found that they would have wider choice of, and tighter control over, tire performance if they had wider flexibility in choice of apex design - that is, if they could specify longer apexes than conventionally used, and apexes with multiple layers of different material ("compound apexes"). The use of compound apexes unfortunately can add to increased tire weight, and thus negatively impact tire rolling resistance. Thus it is desired to have an improved tire design with an improved bead area that has lower weight and lower rolling resistance. At the same time, it is desired to have a tire with improved riding comfort but still having a good stiffness in the lower sidewall region for handling purposes.

### Summary of the Invention

The invention relates to a tire in accordance with claim 1.

Dependent claims refer to preferred embodiments of the invention.

### Definitions

The following definitions are applicable to the present disclosure and are used consistently as defined below:
"Apex" means an elastomeric filler located radially outward of the bead core and between ply and the turnup ply;
"Axial" and "axially" are used herein to refer to lines or directions that are parallel to the axis of rotation of the tire;
"Bead" or "Bead Region" means that part of the tire comprising an annular tensile member wrapped by ply cords and shaped to fit the design rim;
"Bead base" means the portion of the bead that forms its inside diameter;
"Bead core" means an annular hoop reinforcement in the bead region of the tire, commonly formed of steel wire, cords or cables;
"Bead toe" means the portion of the bead which joins the bead base and the inside surface of the tire;
"Belt structure" means at least one annular layer or ply of parallel cords, woven or unwoven, underlying the tread, unanchored to the bead, and preferably having both left and right cords angles in the range from 15° to 35° with respect to the equatorial plane of the tire;
"Circumferential" means lines or directions extending along the perimeter of the surface of the annular tire parallel to the Equatorial Plane (EP) and perpendicular to the axial direction;
"Equatorial plane (EP)" means the plane perpendicular to the tire's axis of rotation and passing through the center of its tread;
"Normal Inflation Pressure" refers to the specific design inflation pressure and load assigned by the appropriate stands organization for the service condition for the tire;
"Radial" and "radially" are used to mean directions radially toward or away from the axis of rotation of the tire;

### Brief Description of the Drawings

The invention will be described by way of example and with reference to the accompanying drawings in which:
FIG. 1 is a cross sectional view of a tire of the present invention.
FIG. 2 is a cross sectional view of a second embodiment of a tire of the invention.

### Detailed Description of the Invention

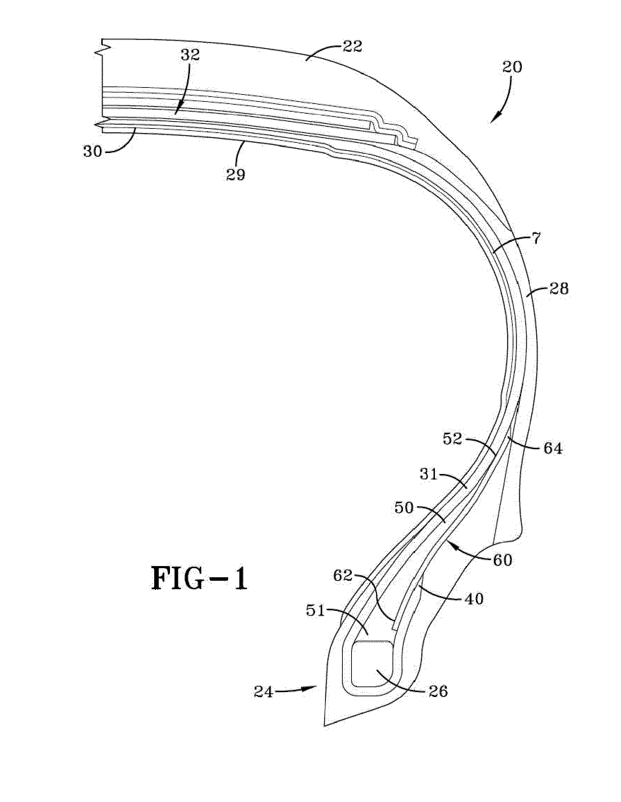

Figure 1 illustrates a cross-sectional view of one half of a radial tire 20 of the present invention. The tire is preferably symmetrical about the mid-circumferential plane so that only one half of the tire is illustrated. Alternatively, the tire may also be an asymmetric tire. The tire 20 as depicted is a passenger tire, but the disclosed invention may be applicable for light truck tires, radial medium truck tires, heavy load tires, industrial tires, off-the-road tires, or other types of tires. One skilled in the art will appreciate that for each type of tire, the internal construction, the tread configuration, and materials of construction will be selected for the desired performance of the tire and may not be identical to what is illustrated. As shown, the tire 20 comprises a pair of bead portions 24 each containing a bead core 26 embedded therein. The bead core 26 is an annular member which may comprise any desired cross-sectional shape, and is not limited to the square shape depicted.

The passenger tire 20 further comprises a sidewall portion 28 extending substantially outward from each of the bead portions 24 in the radial direction of the tire, and a tread portion 22 extending between the radially outer ends of the sidewall portions 28. The tire 20 further comprises a belt package 32 arranged under the tread rubber 22. The belt package 32 is preferably symmetrical about the mid-circumferential plane.

Furthermore, the tire 20 is reinforced with a carcass 30 toroidally extending from one of the bead portions 24 to the other bead portion 24. The carcass may include an air impervious inner liner 29 typically composed of butyl rubber. The carcass further comprises at least one ply 31, preferably oriented in the radial direction. Preferably for a passenger tire application, the carcass has only a single radial ply. The carcass ply 31 may comprise any suitable cord, typically polyester, rayon, nylon cords such as nylon-6,6 cords extending substantially perpendicular to an equatorial plane EP of the tire (i.e., extending in the radial direction of the tire).

The carcass ply extends under the tread portion of the tire and is anchored to each bead. Preferably, the ply 31 is wrapped around each bead ending in a turnup end 40. The turn up end 40 extends radially outward from the bead core 26 preferably in the range of one to three times the bead diameter as measured radially outward from the center of the bead core. More preferably the turnup extends radially outward in the range of one to two times the bead diameter as measured radially outward from the center of the bead core. Preferably, the ply is wrapped from axially inside the bead to a position axially outside of the bead. The ply is wrapped about the bead and an apex 50. The apex is located radially outward of the bead core 26 and may comprise a triangular shaped rubber component having an end, wherein the apex decreases in thickness from the first end 51 adjacent the bead towards the second end or tip 52. The tip of the apex preferably extends past the turnup end 40, although the tip of the apex may be located radially inward of the turnup 40. Located adjacent the apex is a support member 60 (also called reinforcement member). The support member (or support reinforcement member) 60 is positioned adjacent the apex, preferably axially outward and adjacent the apex. The support member 60 has a first end 62 which does not extend to the bead core 26 and does not wrap around the bead core or otherwise be in contact with the bead core 26. The first end 62 of the support member 60 is located between the radially outer surface 27 of the bead core 26 and the ply turnup end 40. The first end is preferably 1-3 mm, preferably 1-2 mm, radially outward of the bead core. The support member has a second end 64 which extends radially outward of the turnup end 40 and preferably radially outward of the tip of the apex 52. Preferably, the second end 64 of the support member 60 is radially outward of the apex tip 52 on the order of 3 to 15 mm, preferably 3 to 7 mm or more preferably 3 to 5 millimeters or more.

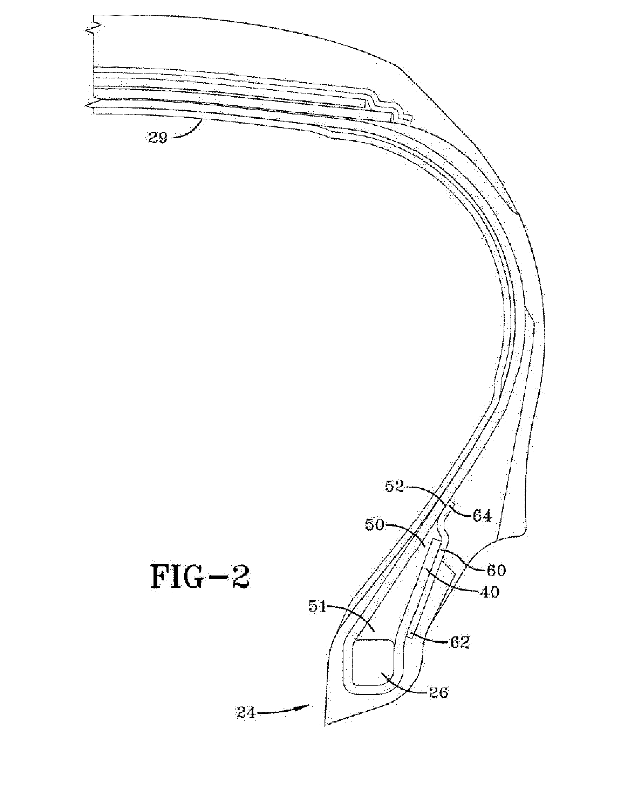

As shown in Fig. 1 the first end 62 of the support member 60 is located between the apex and the ply 31. This is the preferred embodiment. However, the first end of the support member 60 may also be located axially outward of the ply 31 as shown in Fig. 2.

If the tire 20 is a symmetric tire, the support member 60 is preferably applied in the same way in the bead area on both sides of the tires. Alternatively, the support member 60 may be used also only in the bead area on one side of the tire making the tire an asymmetric tire at least in that respect. If the support member 60 is used only on one side of the tire, it is preferably applied on the inboard side of the tire when the tire is mounted on a vehicle in accordance with its specification.

The support member 60 may comprise an aramid material or nylon material, with or without reinforcement textiles. The support member 60 is preferably a thin sheet of material preferably having a thickness on the order of 0.6 to 1.5 millimeter or 0.8 to 1.2 mm within a certain angle. The support member functions to increase longitudinal and radial stiffness in the bead/apex area. Depending on the support member materials and their properties (width, angle ....), the tire handling and comfort can be tuned. The support member may also be comprised of nylon, aramid, steel, polyester, carbon fiber, polyketone fiber, rayon, PN, PBO or a combination of two or more material thereof, with or without reinforcement textiles.

## Claims

1. A pneumatic tire having a carcass (30) and a belt reinforcing structure (32), the carcass (30) comprising at least one inner ply (31) which is wound around an annular bead member (26) and extends radially outward towards a tread (22) forming a turnup end (40), the tire (20) further including a rubber apex (50) located radially outward of the bead member (26) and having a radially outer end (52), wherein the turnup end (40) is located axially outward of the rubber apex (50), and a reinforcement member (60) having a first end (62) and a second end (64), wherein the first end (62) is positioned adjacent the rubber apex (50) and the second end (64) is radially outward of the rubber apex outer end (52).

2. The tire of claim 1 wherein the inner ply (31) is wound around the annular the bead member (26) from axially inside of the annular bead member (26) toward axially outside thereof.

3. The tire of claim 1 or 2 wherein the first end (62) of the reinforcement member (60) does not contact the annular bead member (26).

4. The tire of at least one of the previous claims wherein the first end (62) of the reinforcement member (60) is positioned radially outward of the annular bead member (26) in the range of from 1 mm to 5mm or in the range of from 1 mm to 2 mm.

5. The tire of at least one of the previous claims wherein the second end (64) of the reinforcement member (60) is radially outward of the rubber apex outer end (52) in the range of from 3 mm to 15 mm or in the range of from 3 mm to 7 mm or from 3 mm to 5 mm.

6. The tire of at least one of the previous claims wherein the first end (62) of the reinforcement member (60) is positioned between the apex (50) and the turnup end (40).

7. The tire of at least one of the previous claims wherein the first end (62) of the reinforcement member (60) is in contact with the apex (50) and the turnup end (40) of the inner ply (31)

8. The tire of claim 1 wherein there is only one ply layer (31).

9. The tire of claim 1 wherein the reinforcement member (60) is formed of an elastomer reinforced with nylon cords.

10. The tire of claim 1 wherein the reinforcement member (60) is formed of an elastomer reinforced with aramid cords.

11. The tire of claim 1 wherein the reinforcement member (60) is reinforced with steel, polyester, carbon fiber, PEN, polyketone, rayon or PBO cords.

12. The tire of claim 8, 9 or 10 wherein the cords make an angle in a range of from +/- 35 to 55 degrees with regard to the tire radial direction.

13. The tire of claim 1 wherein the reinforcement member (60) has a thickness in a range of from 0.6 to 1.5 mm or from 0.8 to 1.2 mm.

14. The tire of claim 1 wherein the reinforcement member (60) has a length in a range of from the length of the apex (51) to the length of the apex plus 20 mm, alternatively plus 10 mm.

15. The tire of claim 1 wherein the turnup end (40) is located at a radial distance in a range of from 12 to 25 mm, alternatively from 14 to 20 mm or about 16 mm, as measured from the center of the annular bead member (26).
